Europäisches Patentamt

European Patent Office

Office européen des brevets

(19)

(11) Veröffentlichungsnummer : **0 379 000 B1**

(12) ## EUROPÄISCHE PATENTSCHRIFT

(45) Veröffentlichungstag der Patentschrift :
**25.11.92 Patentblatt 92/48**

(51) Int. Cl.⁵ : **A01D 69/02, A01D 34/78, A01D 34/82**

(21) Anmeldenummer : **90100130.5**

(22) Anmeldetag : **04.01.90**

(54) **Kabelführung für Elektrorasenmäher.**

(30) Priorität : **16.01.89 DE 8900399 U**

(43) Veröffentlichungstag der Anmeldung :
**25.07.90 Patentblatt 90/30**

(45) Bekanntmachung des Hinweises auf die
Patenterteilung :
**25.11.92 Patentblatt 92/48**

(84) Benannte Vertragsstaaten :
**AT BE DE DK ES FR GB IT LU NL SE**

(56) Entgegenhaltungen :
**CH-A- 601 962**
**DE-A- 2 804 648**
**DE-A- 3 013 227**
**GB-A- 2 060 539**

(73) Patentinhaber : **GUTBROD-WERKE GMBH**
**Industriegelände Postfach 60**
**W-6601 Saarbrücken-Bübingen/Saar (DE)**

(72) Erfinder : **Klever, Manfred**
**Scheidter Strasse 40**
**W-6601 Scheidterberg (DE)**
Erfinder : **Rott, Karl-Heinz**
**Waldstrasse 17**
**W-6601 Saarbrücken-Bübingen (DE)**

(74) Vertreter : **Flaccus, Rolf-Dieter, Dr.**
**Patentanwalt Sperlingsweg 32**
**W-5047 Wesseling (DE)**

EP 0 379 000 B1

## Beschreibung

Die Erfindung betrifft eine Kabelführung für Elektrorasenmäher mit einem einen Kabelhalter führenden, horizontal verschiebbaren Führungsbügel, der mit einer an den beiden geneigten Holmen des Griffgestänges festgelegten Querstrebe verbunden ist. Eine derartige Kabelführung ist durch die DE-30 13 227 A1 bekanntgeworden, bei der die Querstrebe als Gleitstange verschieblich an den Holmen des Griffgestänges befestigt ist, jedoch durch Anschläge auch unverschieblich gehaltert werden kann, so daß sie zu einer Querstrebe wird. Die so festgelegte Querstrebe überragt in der Mittelstellung die Holme, was auch für den Führungsbügel für den Kabelhalter gilt, da der U-förmige Führungsbügel mit seinen Schenkeln an den ausladenden Enden der Querstrebe befestigt ist. Gleiches gilt auch für die Vorläuferkonstruktion nach der DE 28 04 648 C2, bei der die Gleitstange über an den Holmen befestigte Klemmstücke mit Rollen leichtgängig verschieblich ist.

Die den Abstand der Holme voneinander überragende Länge einer Querstrebe bzw. Gleitstange mit ebenso langem Führungsbügel hat den Sinn, daß der an dem Führungsbügel geführte Kabelhalter mit dem an ihm befestigten Kabel aus dem Schnittbereich herausgehalten werden kann. Die Überbreite des Führungsbügels gegenüber dem Holmabstand nach dem Stand der Technik wird jedoch für den Mähbetrieb in engen Bereichen oder bei Hindernissen als störend empfunden. Zudem wächst die Gefahr, daß beim Anstoßen an Hindernisse, wie z. B. an Ästen und Zweigen von Sträuchern, die Querstrebe bzw. Gleitstange und der Führungsbügel verbogen werden können, so daß die leichte Verschieblichkeit des Führungsbügels für mehr oder weniger große seitliche Ausladung beeinträchtigt wird.

Außerdem ist die Überbreite des Führungsbügels für die Verpackungsmaße des Rasenmähers derart nachteilig, daß die Kabelführung nach dem Stand der Technik als nachträglich zu montierende Einrichtung in den Handel kommt, so daß der Händler oder Benutzer die Kabelführung selbst montieren muß. Wird die Kabelführung im Anlieferungszustand montiert geliefert, werden Verpackungen übermäßig sperrig, und es besteht auch die Gefahr, daß der Führungsbügel mit Querstrebe oder Gleitstande beim Transport verbogen wird.

Der Erfindung liegt die Aufgabe zugrunde, diese Nachteile zu vermeiden, ohne auf den Effekt verzichten zu müssen, daß der Kabelhalter mit Kabel eine Position seitlich außerhalb des aus geneigten Holmen bestehenden Griffgestänges einnehmen kann.

Gelöst wird diese Aufgabe durch die Merkmale des Schutzspruches 1. Der Grundgedanke der neuerungsgemäßen Lösung besteht darin, den als rechteckigen Rahmen ausgeführten Führungsbügel an einem Gleitstück zu befestigen, das seinerseits auf der sich nur zwischen den Holmen erstreckenden Querstrebe verschiebbar ist. In jeder seitlichen Endlage des Gleitstückes kann dann der Führungsbügel seine Aufgabe zur ausladenden Führung des Kabelhalters erfüllen, jedoch erstreckt sich in der mittleren Stellung des Gleitstückes der Führungsbügel innerhalb des Außen-Abstandes der beiden Holme, so daß bei der Annäherung an Hindernisse und im Verpackungszustand der Führungsbügel geschützt innerhalb des Griffgestänges des Rasenmähers positioniert werden kann.

Um ein Höchstmaß von seitlicher Ausladung des Führungsbügels zu erhalten, ist die Breite des Führungsbügels zweckmäßig gleich oder nur wenige Zentimeter kleiner als der Außen-Abstand der Holme, wobei die Breite des Gleitstückes zur Erhöhung des Verschiebeweges so klein gemacht wird, wie es der Forderung nach einer leichten und verkantungsfreien Verschieblichkeit entspricht, zweckmäßig etwa gleich 1/5 des lichten Abstandes der Holme voneinander.

Die Querstrebe wird nach einem weiteren Neuerungsvorschlag zweckmäßig im oberen Bereich des Grifftgestänges in der Nähe von dessen Handgriff angeordnet, um das Griffstück mit Führungsbügel auch leicht von Hand verschieben oder gar festhalten zu können. Auch kann vorgesehen werden, daß das Gleitstück durch einen Knebel oder dergleichen auf der Querstrebe festgelegt wird.

Weiterbildungen der Kabelführung gemäß der Neuerung sind in den Schutzansprüchen 4 bis 9 angegeben und in der Zeichnungsbeschreibung näher erläutert. Das Gleitstück kann auch aus einem einfachen Stahlrohrstück bestehen, das mit radialen Bohrungen versehen ist, in die die abgekröpften Enden des kleiderbügelartigen Führungsbügels aus Rundstahl einführbar sind. Die Sicherung der abgekröpften Enden kann entweder durch Stumpfschweißen oder dadurch bewirkt werden, daß der Führungsbügel beim Einführen der abgekröpften Enden in die Bohrungen unter Annäherung der abgekröpften Enden elastisch verbogen wird, so daß der Führungsbügel quasi eingesprengt wird.

In der Zeichnung ist ein Ausführungsbeispiel eines Kabelhalters gemäß der Erfindung dargestellt, und zwar zeigen

Fig. 1 das Griffgestänge eines Elektrorasenmähers in teilweiser schaubildlicher Darstellung mit der erfindungsgemäßen Kabelführung,

Fig. 2 die in Fig. 1 kenntlich gemachte Einzelheit "X" im Schnitt und in vergrößertem Maßstab,

Fig. 3 eine Hälfte des zweiteiligen, als Kunststoffspritzgußteil ausgeführten Griffstückes in Innenansicht, und

Fig. 4 das aus zwei Hälften zusammengesetzte Griffstück im Querschnitt nach der Linie IV-IV in Fig. 3.

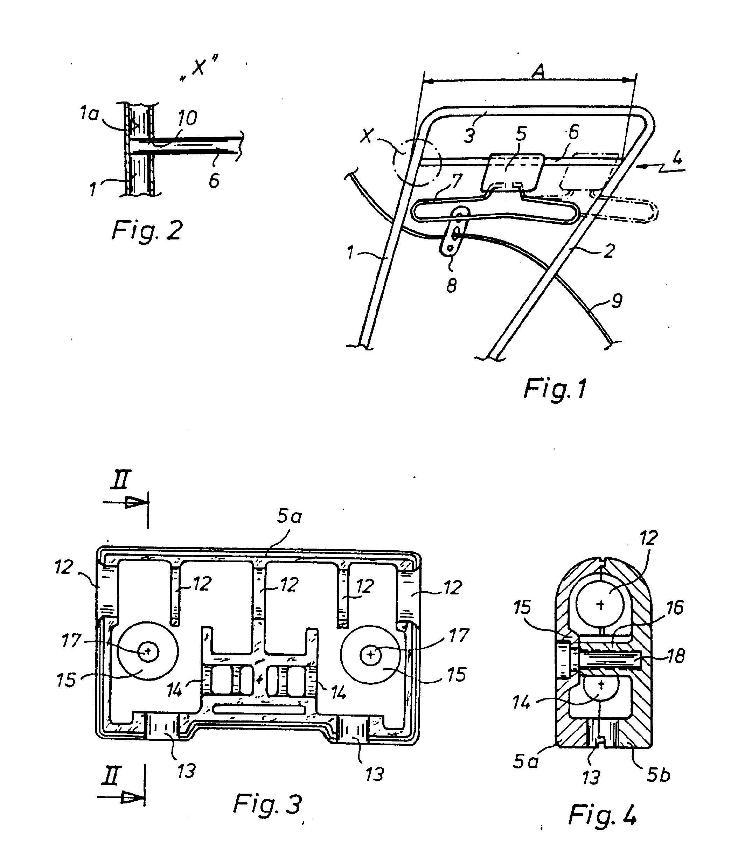

Nach Fig. 1 besteht das Griffgestänge 4 eines Elektrorasenmähers aus den beiden geneigten Holmen 1, 2 und dem Handgriff 3, an dem der nicht dargestellte Schalter befestigt ist. Im oberen Bereich des Griffgestänges 4 ist in der Nähe des Handgriffes 3 eine aus blankgezogenem, d. h. unbearbeitetem Rundstahl bestehende Querstrebe 6 festgelegt, die als Führung für ein Gleitstück 5 dient. An dem Gleitstück 5 ist ein kleiderbügelartiger, als längliches Rechteck ausgeführter Führungsbügel 7 befestigt, auf dem ein Kabelhalter 8 leichtverschieblich geführt ist.

Die Länge der Querstrebe 6 entspricht dem Abstand der Holme 1, 2 an der Stelle der Befestigung der Querstrebe. Die Breite des Führungsbügels 7 ist größer als die Länge des Gleitstückes 5, jedoch höchstens gleich dem Außen-Abstand A der Holme 1, 2 - in der Ebene des Führungsbügels gemessen. In der dargestellten Mittelstellung des Gleitstückes 5 überragt der Führungsbügel 7 keinen der Holme 1, 2, so daß der Führungsbügel in dieser Mittelstellung durch keinerlei Hindernisse gefährdet ist. In den möglichen zwei seitlichen Stellungen, in die das Gleitstück 5 positionierbar ist, überragt der Führungsbügel jeweils einen der Holme, so daß der auf dem Führungsbügel verschiebliche Kabelhalter 8 bis weit außerhalb des Außen-Abstandes A der Holme verstellt werden kann. In Fig. 1 ist eine seitliche Stellung des Gleitstückes 5 nebst Führungsbügel 7 strichpunktiert angedeutet. Die maximale seitliche Ausladung wird erhalten, wenn die Breite des Führungsbügels gleich oder nur wenige Zentimeter kleiner ist als der Außen-Abstand A der Holme und die Breite des Gleitstückes 5 so klein ist, daß es auf der Querstrebe 6 noch leicht und verkantungsfrei verschiebbar ist. Die Breite des Gleitstückes ist etwa gleich 1/5 des lichten Abstandes der Rohre 1, 2 voneinander.

Die Befestigung der Querstrebe 6 an den Holmen 1, 2 ist an sich beliebig. Im Ausführungsbeispiel ist die Querstrebe 6 zwischen den Holmen eingesprengt, was in Fig. 2 für den Holm 1 verdeutlicht ist. Hierzu wird die Querstrebe 6 länger als der lichte Abstand der Holme 1, 2 ausgeführt, jedoch kürzer als der Abstand der Innenwandungen der rohrförmigen Holme in der Flucht zweier einander gegenüberliegender Bohrungen der Holme, die in diese eingestanzt sind. In der Schnittdarstellung von Fig. 2 erkennt man lediglich die Innenwandung 1a des Holmes 1 und eine Bohrung 10, der eine entsprechende Bohrung in dem Holm 2 gegenüberliegt. Zum Einsprengen der Querstrebe 6 werden die Holme 1, 2 herstellerseitig soweit auseinandergebogen, daß die Querstrebe 6 in die Bohrung 10 des Holmes 1 und die nicht dargestellte fluchtende Bohrung des Holmes 2 hineinfindet. Der feste Sitz der Querstrebe 6 ergibt sich aus dem elastischen Rückfedern der Holme oder dadurch, daß bei einem geteilten Griffgestänge das obere Griffgestänge am unteren Griffgestänge festgeschraubt wird.

Das Gleitstück 5 besteht im Ausführungsbeispiel aus zwei Hälften 5a, 5b, die als Kunststoffspritzteile ausgeführt sind. Der in Fig. 3 dargestellten Hälfte 5a entspricht die Hälfte 5b insoweit, als beide miteinander verschraubbaren Hälften halbkreisförmige Aufnahmen 12 für die Querstrebe 6 sowie 13, 14 für die abgekröpften Enden des kleiderbügelartigen Führungsbügels 7 aufweisen, die sich - zusammen- gesetzt- nach Fig. 4 ergänzen. Die Aufnahmen 12 und 14 sind aus Gründen der Material- und Gewichtsersparnis stegförmig ausgeführt, wie Fig. 3 zeigt. Zwischen der Querstrebe 6 und den Aufnahmen 12 besteht ein Spiel von etwa 1 mm. Beide Hälften 5a und 5b haben vorspringende Ansätze 15, 16, die mit Bohrungen 17, 18 zur Aufnahme von Befestigungsschrauben versehen sind. Wie die zweifach abgekröpften, spiegelbildlichen Enden des Führungsbügels 7 in das Gleitstück eingesetzt sind, ist aus Fig. 1 zu erkennen. Der Führungsbügel 7 ist somit starr mit dem Gleitstück 5 verbunden und nimmt normalerweise eine hängende Pendellage ein, da die Holme 1, 2 des Griffgestänges 4 üblicherweise aufwärtsgeneigt verlaufen. Der Kabelhalter 8 wird vor der Befestigung des Führungsbügels 7 über eines dessen abgekröpfter Enden übergestreift.

**Patentansprüche**

1. Kabelführung für Elektrorasenmäher mit einem einen Kabelhalter führenden, horizontal verschiebbaren Führungsbügel, der mit einer an den beiden geneigten Holmen des Griffgestänges festgelegten Querstrebe verbunden ist, **dadurch gekennzeichnet,** daß die Länge der Querstrebe (6) dem Abstand der Holme (1, 2) voneinander entspricht und als Führung für ein Gleitstück (5) dient, daß der Führungsbügel (7) als längliches Rechteck ausgeführt ist, dessen obere, unterbrochene Seite mit dem Gleitstück (5) fest verbunden ist, daß das Gleitstück rollenlos durch ein Spiel zwischen Gleitstück (5) und Querstrebe (6) verkantungsfrei verschieblich ist, und daß die Breite des Führungsbügels (7) größer als die Breite des Gleitstückes (5), jedoch höchstens gleich dem Außen-Abstand (A) der Holme - in der Ebene des Führungsbügels gemessen - ist derart, daß der Führungsbügel (7) zwischen einer mittigen Stellung, in der er keinen der Holme (1,2) überragt, und zwei seitlichen Stellungen positionierbar ist, in denen er jeweils einen der Holme überragt.

2. Kabelführung nach Anspruch 1, dadurch gekennzeichnet, daß die Breite des Gleitstückes (5) etwa gleich 1/5 des lichten Abstandes der Holme voneinander ist.

3. Kabelhalter nach Anspruch 1, dadurch gekennzeichnet, daß die Querstrebe (6) im oberen Bereich des Griffgestänges (4) in der Nähe von dessen Handgriff (3) angeordnet ist.

4. Kabelhalter nach Anspruch 1, dadurch gekennzeichnet, daß die Querstrebe (6) aus blankgezogenem Rundstahl besteht.

5. Kabelführung nach Anspruch 4, dadurch gekennzeichnet, daß die Querstrebe (6) länger als der lichte Abstand der Holme (1, 2) des Griffgestänges (4), aber kürzer ist als der Abstand der Innenwandungen (1a) der rohrförmigen Holme in der Flucht zweier einander gegenüberliegender Bohrungen (10) der Holme, so daß die Querstrebe durch elastisches Aufbiegen der Holme in die Bohrungen einsprengbar ist.

6. Kabelführung nach Anspruch 5, dadurch gekennzeichnet, daß die Bohrungen (10) in die Holme (1, 2) eingestanzt sind.

7. Kabelführung nach Anspruch 4, dadurch gekennzeichnet, daß Querstrebe (6) durch spanloses Abtrennen auf ihre Länge zugeschnitten ist.

8. Kabelführung nach Anspruch 1, dadurch gekennzeichnet, daß das Gleitstück (5) aus einem Kunststoff- oder Aluminiumspritzteil besteht, das Aufnahmen (12 bis 14) sowohl für die Führung an der Querstrebe (6) als auch für die Befestigung abgekröpfter Enden des kleiderbügelartigen Führungsbugels (7) aufweist.

9. Kabelführung nach Anspruch 8, dadurch gekennzeichnet, daß das Gleitstück aus zwei miteinander verschraubbaren Hälften (5a, 5b) besteht, deren Aufnahmen (12 bis 14) sich halbkreisförmig ergänzen.

**Claims**

1. A flex guide for electronic lawn mowers with a horizontally slidable guide bow serving as a guide for a flex holder, said guide bow being connected to a cross strut secured to the two inclined bars of the handle structure,
**characterized in that**
the length of the cross strut (6) corresponds to the distance between the bars (1,2), that said cross strut (6) serves as a guide for a slider (5), that the guide bow (7) is formed as an oblong rectangle, the discontinuous top side thereof being fixedly connected to the slider (5), that, due to a clearance between slider (5) and cross strut (6), the slider, which is not provided with rolls, is slidable without the occurence of jamming, and that the width of the guide bow (7) excedes that of the slider (5), however, its maximum width not exceding the outer distance (A) between the bars - measured in the plane of the guide bow -, such that the guide bow (7) may be positioned between a centric position in which said guide bow does not project over any of the bars (1,2) and two lateral positions in each of which positions said guide bow projects over one of the bars.

2. The flex guide according to claim 1 characterized in that the width of the slider (5) amounts to approximately 1/5 of the clear distance between the bars.

3. The flex holder according to claim 1, characterized in that the cross strut (6) is arranged at the top region of the handle structure (4) near the handle thereof (3).

4. The flex holder according to claim 1 characterized in that the cross strut (6) is made of bright-drawn rod steel.

5. The flex guide according to claim 4 characterized in that the length of the cross strut (6) excedes that of the clear distance between the bars (1,2) of the handle structure (4) while being smaller than the distance between the interior walls (1a) of the tubular bars in the range of two opposing drills (10) provided in the bars, such that the cross strut may be forced into the drills by elastically bending up the bars.

6. The flex guide according to claim 5 characterized in that the drills (10) are punched into the bars (1,2).

7. The flex guide according to claim 4 characterized in that the cross strut (6) is cut to its length by a non-cutting severing process.

8. The flex guide according to claim 1, characterized in that the slider (5) comprises a moulded part of plastic or aluminium provided with receiving means (12 to 14) for guiding on the cross strut (6) as well as for attachment of the ends of the clothes peg-like guide bow (7), which are bent at right angle.

9. The flex guide according to claim 8 characterized in that the slider comprises two halfes (5a, 5b), which may be screwed together, the semicircular receiving means (12 to 14) of which complementing each other.

## Revendications

1. Guidage du câble pour tondeuse à gazon électrique comprenant une tringle de guidage se déplaçant horizontalement et guidant le porte-câble, qui est reliée à une entretoise fixée aux deux montants inclinés du support de la poignée, caractérisé en ce que la longueur de l'entretoise (6) servant à guider un élément coulissant (5) correspond à l'écartement des montants (1, 2), en ce que la tringle de guidage (7) est réalisée sous forme de rectangle allongé dont la partie supérieure interrompue est reliée fixement à l'élément de guidage (5), en ce que l'élément de guidage se déplace sans roulettes et sans entrave grâce à un jeu entre l'élément coulissant (5) et l'entretoise (6), et en ce que la largeur de la tringle de guidage (7) est supérieure à la largeur de l'élément coulissant (5), ou tout au plus égale à l'écartement extérieur (A) des montants mesuré à la hauteur de la tringle de guidage, si bien que la tringle de guidage (7) peut prendre soit une position médiane dans laquelle elle ne dépasse aucun des montants (1, 2), soit deux positions latérales dans lesquelles elle dépasse chaque fois un des montants.

2. Guidage de câble selon le revendication 1, caractérisé en ce que la largeur de l'élément coulissant (5) correspond environ à 1/5 de l'écartement des montants.

3. Porte-câble selon la revendication 1, caractérisé en ce que l'entretoise (6) est disposée dans la partie supérieure du support de la poignée (4), à proximité de la poignée (3).

4. Porte-câble selon la revendication 1, caractérisé en ce que l'entretoise (6) est composée d'acier rond étiré brillant.

5. Guidage du câble selon la revendication 4, caractérisé en ce que l'entretoise (6) est plus longue que l'écartement des montants (1, 2) du support de poignée (4), mais inférieur à l'écartement des parois intérieures (1a) des montants en forme de tube dans l'alignement de deux alésages (10) opposés situés sur les montants, si bien que l'entretoise peut être enfoncée dans les alésages en écartant souplement les montants.

6. Guidage du câble selon la revendication 5, caractérisé en ce que les alésages (10) sont emboutis dans les montants (1, 2).

7. Guidage de câble selon la revendication 4, caractérisé en ce que l'entretoise (6) est coupée à dimension sans enlèvement de copeaux.

8. Guidage du câble selon la revendication 1, caractérisé en ce que l'élément coulissant (5) se compose d'une pièce en matière plastique ou en aluminium moulée par injection présentant des logements (12 à 14) à la fois pour le guidage sur l'entretoise (6) et pour fixer les extrémités coudées de la tringle de guidage (7) en forme de cintre.

9. Guidage du câble selon la revendication 8, caractérisé en ce que l'élément coulissant se compose de deux moitiés (5a, 5b) pouvant être vissées ensemble, dont les logements (12 à 14) en forme de demi-cercle se complètent.

Fig. 2

Fig. 1

Fig. 3

Fig. 4